# EUROPEAN PATENT APPLICATION

(11) **EP 3 046 058 A1**
(43) Date of publication of application: **20.07.2016**
(21) Application number: 15151299.3
(22) Date of filing: 15.01.2015
(51) Int. Cl.: G06Q 10/02, G06Q 50/14

(54) **Method and electronic travel route building system, based on an intermodal electronic platform**

(71) Applicant: Nextop Italia SRL Semplificata, 07100 Sassari (IT)
(72) Inventor: Oppo Demarchi, Carlo, 07100 Sassari (IT); Meloni, Michele, 09124 Cagliari (IT)
(74) Representative: Baroni, Matteo

(57) **Abstract**

The present invention provides for an electronic system for travel route building, adapted to build multimodal itinerary routes comprising data relating to starting location, target location, intermediate location nodes, segments connecting the intermediate nodes and the starting and target location, comprising the following electronic modules:
- a search manager module (2) receiving requests for travel route building from an electronic client device comprising data relating to said starting location and target location, and managing the building up of a number of said multimodal itinerary routes comprising said starting location and target location, to be submitted to said electronic client device for selection of the travel route between said starting location and target location;
- a harvesting module (3), controlled by the search manager module to perform data queries in an internal relational database (4) and in external service providers' databases (6) to get data relating to alternatives for said intermediate location nodes, segments connecting the intermediate nodes, the data obtained from the external service providers' databases being stored in said relational database (4);
- an injection module (7) populating a graph database (9) with the data obtained from the harvesting module, to build up all possible multimodal itinerary routes between said starting location and target location;
- a seeker module (8), controlled by the search manager module (2) for searching said graph database (9) to select among said all possible multimodal itinerary routes those matching selection criteria received from said electronic client device, obtaining selected multimodal itinerary routes, and ranking said selected multimodal itinerary routes according to ranking criteria; sending data relating to said ranked selected multimodal itinerary routes to said electronic client device for said selection of the travel route.

## Description

### Field of the invention

The present invention relates to a computer based electronic travel route building system and method, based on an intermodal selling platform, accessible through an interactive user interface that enables users and/or travel agents to build simple or complex itineraries in just one search and one charge.

### Description of the prior art

### Technical problems to be solved.

Travelers and travel agents pose travel planning queries to computer travel planning systems (TPS), such as online travel agencies web sites, carrier-specific web sites, or interfaces supplied by global distribution systems (GDSs) as commonly used by travel agents. Each travel planning systems often supports unimodal queries and not combines different carriers each other. In response to fare quotation query, these travel planning systems typically return a list of possible answers, each including same type of means of transport and fare information, although answers may also take other forms such as a multi-modal itineraries made by different transport modes single or combined. Some online travel planning systems generally produce a set of planning options, or itineraries for the traveler to consider. These options are often in the form of a single list of the possible itineraries which the traveler may select from. Such a display approach makes it difficult to clearly compare, discriminate, focus, and assimilate criteria and information that are likely to be important to the traveler. Planning a summer vacation or organising a business trip could be quite complicated since the user has to visit, according to some Google analysis, up to 25 websites before deciding your destination, transports and accommodation: even so, the user has probably left some money, time or both on the table. Some reasons for this difficulty include up to the multitude of travel providers, inhomogeneous data formats for schedule information, pricing schemes and taxation among many others. Even when information on alternatives is accessible to users, only a limited subset of alternatives are perceived and even fewer alternatives are actually considered. This often leads to choosing sub-optimal routes for the user.

The online travel agencies are set vertically and offer unimodal travel solutions comparing same kind of transport mode: only flights, only trains, or dynamically packaged combinations composed of hotel + flight, hotel + car rental or hotel + flight + car rental. The user is having to choose - before running a search - the website channel where performs it: flights, trains, cruises, ferries.

Typically users should fill the different channel forms with origin, destination, date and passengers information as many times as the travel solutions they are looking for. These systems do not therefore allow the user to know all the available transport modes linking two or more places through a single query, nor to know the available travel options for that route at the time of the form filling in real time and before the results display.

GDS providers split their travel supply across different channels and views through their desktop interfaces, so travel agents must navigate multiple interfaces and repeat queries many times before building a complete trip: usually travel agents starts booking flights, then other transport modes, then accommodations, then last miles carriers or car-rentals and attractions at the end. They don't have a unique interface where planning and pricing all in just one step. Existing booking systems allow multi-modal or multi-destinations quotations, but they don't include travel packages or tours even only for individual pieces of the route among the various travel itineraries which may help users saving money.

On the other hand the current multimodal search engines offer a unique search experience but a limited and fixed possibility to filter preferred carriers in advance assuming that users already know the transport means that connect two places. In that case the filter options apply indistinctly to all the different results and different routes (for multi-destination queries for instance) even if the filtered carrier doesn't operate that route.

For example, users should know first if London and Paris are connected by flights, trains or ferries to run the appropriate query or filter the search with the appropriate transport category: trains, flights, ferries. But if they select the train option to the itinerary London > Paris > Dubai, the filter would be applied also so the Paris-Dubai route although it is easy to imagine that you have not a train connecting the two locations.

The current reservation systems suggest the users, while they edit the points of departure and arrival, the areas considered connected to the main point of departure/arrival selected so-called proximity search: they usually suggest alternative airports but not train or bus stations.

There's a lot options that users cannot easily take into account.

The current reservation system, even though they are multimodal, compare and combine single or roundtrip journeys without quoting fares of complex itineraries, composed of a plurality of destinations, applying the correct rates or the best available fares, taking into account the travel preferences chosen by the user as well as the age (and not just the number) of each single different passenger: these data are essential to know in order to quote and apply the proper fares correctly for each Adult, Child, Infant as the different carriers consider different age range for each PAX category to apply different fares: for flights, IATA considers Infants the babies aged from 0 to 2 years, while trains consider Infant aged from 0 to 4 years. That's the reason why a intermodal platform should ask before the age of each passenger to quote the best available fare. Age that passenger must have till the until the return from the trip.

The existing intermodal systems typically link the main carrier as rail or air transport to the ancillary services and consequently create an itinerary link from/to the airport or station to the city center and vice-versa while our platform also considers as alternatives the interchange of transport modes: for instance a train or a flight which makes stop (transfers), where you continue your trip but by another type of carrier.

Known route planning mechanisms should address some typical intermodal topics as highly heterogeneous and variable routes, inaccurate and incomplete information, and the lack of universal, accurate metrics for evaluating, filtering and sorting the different routes. Well, none of them enable users to build their own trip but stress them with tons of results, almost all not such relevant to the choice of the best trip.

Known route planning system requires finding an ideal route from a departure point to a destination point. Users often have many alternatives for routes, but are faced with difficult to obtain information on routes and they never have the opportunity to pick preferred travel chain (or carriers) upfront in order to quote all or just some of them in one query.

Current routing systems work well for finding routes on homogeneous networks with perfect information and clearly defined metrics. However, route planning scenarios result in a number of additional challenges, including heterogeneous data management, best fare quotations for the different passengers and/or different itineraries, multi-stop and or multimodal itineraries.

Itineraries can be heterogeneous on one hand with respect to quantifiable, objective properties of the vehicle or means of transportation, conditions imposed by the travel provider or schedule; on the other hand itineraries may be dependent on specific and subjective properties of the user such as user travel preferences or special requests which limit the amount of possible itineraries since some variables should be known by the system as wheelchair assistance availability on a particular vehicle.

The itineraries built increase exponentially with the number of vias (transfer or stop-over) considered, that is why current algorithms can only consider a small subset of all possible travel route options. Evaluating different metrics on all the possible routes is a time consuming process; the results are only presented after a lengthy process. There are some restrictions of current travel planning. First, current travel planning, in particular multi-modal travel, is often a static process; travel arrangements and shipping routes are fully determined in advance. Moreover, current travel planning often only considers a small number of general criteria or metrics, not taking into account specific individual travel requirements (e.g. special rates, restricted mobility, minimum/maximum changeover times, luggage allowance, visa restrictions, preferences, etc).

Both types of restrictions are exacerbated for multi-modal travel due to the multitude of travel providers involved and the different constraints for different modes of transportation and for different users. That's why is so important giving the user the chance to select preferred transport options dynamically, in order to reduce upfront the management of this complexity at search form level since probably user is not even interested in knowing any possible route. This procedure allows the intermodal mechanism to reduce the number of queries to the various suppliers and accordingly the waiting times of the responses given by the system that will handle a smaller amount of data and returning more relevant solutions to the user.

Main advantages of the present invention aimed at solving the above identified problems.

The system of the present invention is an all-in-one system that helps travelers and travel agents to build, search, quote, book, save and share single or multiple routes itineraries with all the available single or combined carriers and ancillary services, personalizing each segment of the trip in just one search and allowing the reservations of all the items included in the booking in just one charge.

The system of the present invention is based on an intermodal selling platform which enables users to build their own trip or find the best travel solution to book in just one search and one transaction.

One or more of the following advantages may be provided by one or more aspects of the present invention:
- to search all the available connections between two or more places or build his own, across all the available transports (such as bus, car, car-pooling, ferry, foot, metro, plane, rentals, ride-sharing, taxi, train, etc. retrieved or imported by various travel providers), public or private, single or combined carriers, long-haul or short-haul, inbound or outbound, in short or long distance, direct, nonstop or 1 or more stops, with changes, stop-over, etc;
- to quote fare prices quickly and check the availability of each carrier included in the itinerary accordingly to the selectable options relating to a preference or requirement for each segment applied by the traveler;
- to check the itinerary compatibility, or any segment of it, with packages, special offers or all-inclusive tours to include in the itinerary; the system dynamically packages each kind of transport modes with ancillary services, accommodations or other services (for example Uber credit);
- to build or optimize in a few steps through an interactive interface a unimodal or multimodal travel itinerary as simple as a one-way or roundtrip, or much complex as a circle-trip, a multi-destination, a so called open-jaw; so you can select a variety of travel options for each segment or route of the itinerary, also adding related services per each day of stay such as accommodations;
- to compare and/or combine all carriers, single or combined each-other in itineraries, which connect two or more places, and all the available transport-related services including ancillary services, accommodations, tours and attractions;
- to book in a single transaction or charge all or just some items of the selected route (public and private transport, accommodations, transfers, insurances, ancillary or collateral services);
- to allow precise fare quotations filling just one time passenger information such as the number and the age of adults, seniors, children and infants which may be important in determining the correct price for a ticket since the different carriers or companies may consider a different age range for instance for infants rather than children.
- to know in advance, before running a query and just after typing the origin and the route destination, all the available carriers, transport modes and itinerary options (like hotels, other type of accommodations, attractions) that user can pick, drag & drop or select to quote a precise itinerary.
- to sponsor a transportation provider (for example Uber) that pays for displaying his logo or his carrier availability for a given route edited by the user in the homepage in order to persuade him to select and book it, adding this option to the itinerary.
- to share or refinish trips (incoming or past) with family, colleagues and friends that can modify each elements of the itinerary and repeat the same experience even if they depart from or arrive to different places: the system recalculates each change and build brand new itineraries taking into account the changes made for the selected dates.
- to include or merge owned or third parties packaged tour to the user's itinerary if eligible. The system is able to suggest tour packages to the user if the edited destinations match with the proposed tour in order to save money with all-in-one package solution. The system is able to suggest packaged tours even if just some stop-overs of the user's itinerary matches with them: in this embodiment the system build the missing segments in order to allow users to join the tour. For instance if a tour starts from El Cairo while a user is planning a similar trip departing from Milan, the system calculate the missing connection between Milan and El Cairo and merge the user itinerary with the tour.

Thanks to an interactive user interface, the travel planning system of the present invention provides a graphical and/or textual representation of a user's query and updates results accordingly to the user's inputs, changes or selected options. The path representing a timeline includes all the travel data edited and/or added by the users: each origin and destination is represented as a node in the graph and a trip is represented as a path or branch through a graph; accommodations, are treated as a pin or other icons. Users may select displayed options to calculate their itinerary, check the availability and quickly quote,, for instance, their preferred carriers or transport companies, accommodation type, available ancillary services. Users can also drag & drop their textual or graphical representation into the active areas of the timeline as well as travel preferences like nonstop carriers, faster or cheaper trip, business or leisure purposes, number and typology of passengers (adults, seniors, children, infants), special requests like wheelchair, pets or extra services (e.g. luggage, etc).

By the system of the present invention, the displayed travel options and connections for a given route or place edited by the user are retrieved from a database (populated with those information, retrieved or imported) in real-time, thanks to an instant search; so the system requires at least the filling of one origin (which can still be also detected automatically by a geolocation system) and a destination. If a user fill the origin and the destination with the same city name, the system will display all the available services for that place (e.g. Milan > Milan the system assumes user is looking for local services as car-rental or accommodation in that place and not connections between places). For each route, user can select, deselect or just drag&drop the desired options (and change their order) represented by icons, texts or both, into the timeline to get first an instant approximate quotation. He can also change the order of them. Then, when the user completes the building of the itinerary, he can submit the query to get a precise fare quotation of each item added accordingly to the selected preferences if any. If user doesn't express any preference, the system suggest the best itinerary found across multiple variables.

Once the query has been submitted, the system of the present invention in turn will query simultaneously its database and that third party providers to build a feasible itinerary, get schedules, prices and availability of all the carriers or services included. Then the system manages the retrieved information, organize them into unimodal and/or multimodal and/or intermodal itineraries in order to display all the travel solutions found which the users can filter or optimize and book and/and/or save or share.

The system of the present invention enables users to build any travel itinerary quickly, customize it easily, quote fares and prices, check booking availability instantly for any kind of trip (one-way, roundtrip and multiple destinations). It just requires the filling of few fields such as origin, destination, departure dates, number and age of passengers (adults, children, infants), date of return (if any), add another route (if any); those are mandatory information, on the other hand user may choose any travel option and/or preference.

The system accepts any data format of origin and destination inserted by the user: very precise (as a geographical address typed with XY coordinates or automatically detected, a trademark, a sign, an event, a point of interest e.g. Station or Airport, a IATA code or other international codes) or generic names such as cities or places in the original language or translated as well.

The system will find all available carriers, single or combined, that operates that route from a given point of departure to a destination, including alternative proximity points and considering therefore also departing / arriving points from the given places according to a defined or definable geographical distance from what can be considered the "center" of the point of departure / arrival entered by the user.

The system of the present invention also allows users to build and save the trips they plan on travel in the future or to rebuild and reminisce about their past trips that they can share and serve as a database for future travelers. When users save their itineraries, they find them among the featured travels (a public website area where users look for itineraries to travel) or in their user area from where they can select it to repeat it as it is (or just changing the arrival/departure/stay dates of the trip) and/or even by changing the points of departure or arrival, duration, nights or other shipping options or accommodation. Almost everything! Travelers can rate them, post comments, propose changes, share and suggest them to their friends who may repeat the same travel experience updating availability, changing dates of departure and arrival, changing some parts as well as repeating the same itinerary but departing and arriving from different places). They can also save the built itinerary and book it all or book just some parts immediately or during the journey.

The system of the present invention checks if any part of the itinerary is eligible for packages (provided by us, third parties or dynamically packaged) in order to display a lower price if necessary conditions recur.

The system, when users select travel options in advance, may reduce the total number of queries to the related providers - typically paid - which needs to build the requested itinerary. This is an undisputed advantage in terms of costs saved since multimodal algorithms may require multiple queries in order to acquire the data needed to build and quote the requested itinerary.

If the users do not select any option while editing the trip and submit anyhow the query, the system provides default travel solutions for the submitted routes basing its result on the cheaper, faster or featured itinerary. Featured itineraries may be ranked on the basis of several factors as for instance, best rating, number of stops, best seller, tour inclusion, packages eligibility, others metrics.

At any time users can apply filters or sorting options to results list, or change the view from multimodal to intermodal (including or excluding last mile carriers).

### Comparison of the main characteristics of the present invention with the drawbacks of the prior art systems.

Known online travel agencies, central reservation systems (CRS), global distribution systems (GDS) or travel metasearch engines typically provide homogeneous travel solutions (flight versus flight results, train results, etc.). Usually they split their search forms by thematic channel (trains, cruises, flights, hotels, etc.) giving users the ability to search results among the same type of transport or accommodation for instance only flights or trains or ferries or hotels or villas and b&b. They never provide a universal search with a unique form where users can find everything in just one search without any channel splitting.

The typical query supported by known travel planning systems is the so-called low-fare-search (LFS) query which provides the cheapest fares mostly for flights and less for other transport means; and never by means of transport combined with each other. In response to an LFS query these travel planning systems return a list of possible unimodal answers, typically flights, each including carrier and price information, although answers may also take other forms such as a multimodal answers (flights or trains) or itinerary (combined carriers). Known travel planning systems may allow users to apply filters, sorting options or preferences to the compared or quoted transport modes, typically flights and less trains or coaches or combinations of them. But in the real world there are many ways to reach a place and different carriers, single or combined each other into itineraries, may concur to link two or more places.

Known multimodal search engines compare and/or combine indiscriminately each kind of available transports that could be a good solution especially when traveler doesn't know which are the available carriers that link two places; on the other hand this methodology can display thousands of results and it may be necessary to offer also a long list of filtering options - one for each route - to reduce this complexity to the most relevant result for the traveler.

A frequent traveler usually knows well the itinerary route he wants to quote and book, and he could be quite annoyed by tons of not-relevant results since multi-modal engines shows all possible combinations of transport. Usually in flight comparison results list we usually find different results of travel solutions: each result is made of a schedule flight, nonstop or multi-stop, with transfer or not, of different airline companies. In the multi-modal approach we also have travel solutions of nonstop or multi-stop carriers, different companies, different schedules; itineraries not just one-kind carriers comparison, then the combination of several variables creates a huge number of combinations.

Known multimodal systems cannot always use the data stored in their database thanks to caching procedure and they need to query many providers in order to quote prices and get the real-time availability for the carriers or services involved in the itinerary. Imagine how long it would take searching all these different options to get all possible orderings & transit options. Much more than a minute for sure. This is a double problem, in terms of cost and time of performance. For this would be desirable to find a way to limit the total number of queries, especially if the user is already able to express travel preferences at the time of filling in the form.

Known GDSs, CRSs, OTAs, Booking Engines or Metasearch show just unimodal price calendar to display the lowest price on flights or trains or vacations or ferries or hotels. A multimodal engine could display the lowest price across all carriers that link two places while the system of the present invention displays the lowest price for itineraries made by just one or more destinations, for single or combined carriers, including accommodations, packages, ancillary services.

Never the less known travel planning systems allow multi-destinations search, usually up to 5 destinations at time, but they research always the same typology of carriers or services: they usually quote fares up to 5 flight routes or hotels.

No other system or service already allows users to run a multiple destinations query on a multi-modal basis to research all the available carriers and routes at the same time.

The system of the present invention also allows users to quote similar itineraries for groups that depart from different places and rejoin in the same place, simply duplicating the interactive timeline and selecting different passenger options (or other options) for each one. The system of the present invention allows users to modify the query, changing easily the order of routes and transportations just selecting, dragging and dropping them in the desired order.

US8831881-B1 discloses an interactive user interface for displaying available trips. The user interface includes a calendar overview tool. The computing system is configured to perform operations including obtaining data describing a plurality of trips between an origin and a destination. Each trip has a departure time and an arrival time. The operations also include respectively representing the plurality of trips with a plurality of trip identifiers at different positions on a first axis of a graph. The graph has units of time on a second axis. Each trip identifier extends from the arrival time to the departure time of the trip such trip identifier represents. An interval of time depicted by the graph can be adjusted by a user.

The system of the present invention instead displays an interactive user interface before starting the search, and then allows the user to select the available options for that route (that maybe are not available for other routes) and then search for the available trips within a narrower circle of travel solutions. The system then goes to seek the best combination of public or private transport also subject to seat reservation. Compared to this, the system calculates a plurality of origin and destination, really feasible and subject to real-time availability which secures the online booking with a single search and a unique transaction. US8306835-B2 discloses a user interface displayed on a computer monitor includes fields for entering data for a multiple passenger, multiple route query, the fields including a first set of fields corresponding to travel segments of a first passenger group, a second set of fields corresponding to travel segments of a second passenger group, and a third set of fields corresponding to shared travel features between the first travel group and second travel group. The interface of the system of the present invention instead includes the age field in the first set of fields corresponding to a first trip having a plurality of travel segments for travel by a first passenger group having at least a first traveler, each of the fields of the first set including an origin and a destination of travel for a travel segment of the first trip. That's why the age of adults, seniors, children and infants which may be important in determining the correct price for a ticket since the carriers involved in that itinerary may consider different age range for infants or children.

US20030187851-A1 discloses a computer program operable to cache and utilize flight availability data for specific subscribers, the program comprising:
a cache database operable to temporarily store flight availability data and configured to only store flight availability data for subscribers and airlines that have been configured to use the cache database; and a cache query utility operable to add flight availability data to the cache database, query the cache database, return flight availability data from the cache database stored specifically for use by at least one subscriber, and delete flight availability data from the cache database after a shelf-life has expired.

The system of the present invention instead is preferably used as an intermediary between all transport modes servers, not just airline, and customers. Its system caches and retrieves all single dynamic database of schedules (flight, bus, ferry, train), fares (prices) and seat availability - standalone carriers or itineraries.

US20110106574-A1 discloses a method to travel scheduling and pricing, and more particularly to processing low-fare-search queries for air travel planning computer systems. In travel planning such as for air travel scheduling, flight pricing and low-fare-search, queries are posed by users from travel agent systems, airline reservation agent systems, travel web sites, and airline-specific web sites. Low-fare-search (LFS) queries typically include origin and destination information, time constraints, and additional information including passenger profiles and travel preferences. Travel planning systems respond to these LFS queries and typically return a list of possible tickets that satisfy the query, each a flight combination with price information. Some travel planning systems return answers in a compact form such as through a pricing graph.

The system of the present invention instead provides a method of managing a query cache also considering as a relevant result of the wide query different types of carriers which travel the same routes.

US8417409-B2 discloses a public transit travel planning system and method is provided which uses pre-processed transit information prior to query time to determine optimal public transit routes in response to a query for a journey or trip using public transit. The optimal public transit routes describe the best routes for a trip relative to time and other factors using only public transportation and/or walking to reach a destination location from a given starting point. The public transit travel planning system processes transit information (which describes basic public transit schedules) prior to query time to determine optimal transfer patterns that describe routes between any two transit stations. More specifically, a transfer pattern describes a sequence of transit vehicle transfers at one or more transit stations that need to be made in order reach a destination. By pre-processing the transit information to determine the transfer patterns prior to query time, a minimal amount of computation at query time is needed in order to fulfill a user query for a public transit route. Generally, the system performs pre- and post-query computations in order to provide users with public transit routes.

The system of the present invention instead retrieves transfer patterns of public transit as well as scheduled transports subject to availability (price, seat, schedule), so the system determines instantly (or thanks to still valid cached results) the available optimal transit route from the source origin to the target destination for a specific date or time.

WO2014116297-A1 discloses a travel planning platform to organize information within a securely accessed dashboard which then organizes travel product within trip-board. The travel planning platform enables consumers and/or travel agents and/or travel planners to aggregate and organize (pin or mark) specific travel products from any third party travel site and/or database into one location. Also, the platform is configurable such that it can display other relevant information and travel products to the travelers/user.

The system of the present invention instead doesn't require any restricted access to its interface which is public and enables users to build their preferred itinerary made of available items: the system checks availability (price, seat, schedule) across third parties providers or imported data and is able to combine transports to create route. It enables also user to easily compare complex itineraries made by selected options or features.

US20120185793-A1 discloses a trip planning service allowing users to easily edit and buy trips which consist of several items and elements. The trip planning service allows for editing a trip which respects a set of rules, such as rules that all nights have accommodations, scheduled visits are on intended days, etc. The trip planning service automatically updates elements to make them correct. In some examples, the trip planning service allows editing a trip in a single web page or interface screen through which the user interacts.

The system of the present invention instead dynamically displays an interactive user interface which represents graphically the query of the itinerary that users want to run to check fare prices and availability. Users know the available options for that route in real time just after typing an origin and a destination and before launching the query; so they could interact with the timeline selecting required options in order to quote, book, compare or combine carriers and ancillary services even if they haven't been selected by the users. In this case system suggests featured routes.

The system of the present invention therefore is not just a simple trip planning system but an intermodal platform which accepts user's inputs through its user interface for building a complex query, finding intermodal itineraries and checking availability.

US20090313679-A1 discloses a website which may allow a user to create an online travelogue to reminisce about his trips, and then serve as a database for future travelers. The website may provide a variety of different templates to help users to organize and document elements of their trips. A user may select a template he prefers to start to create a record of his trip. A template may provide a layout for pictures and information about the flights he took, hotels he stayed at, places he visited, restaurants he went to, people he met, and other activities on the trip. The website may automatically abstract the user's flight information from a travel website and fill in the information at places for such information on the template. A user may drag pictures from an online photo management website and drop them on the template. The website may search the Internet according to the information from the user and provide pictures, videos and text for the user to put on the template. The website may allow a user to set his travelogue as public or private/password protected, and may pool the public travelogues together to provide references to later travelers.

The system of the present invention instead provides a personal travel organizer and online travelogue saving all the searches made by the users. Each search result is a fully quoted itinerary represented graphically by a timeline made of places, transports and accommodations that users can share with friends, add comments or ratings and let them live again the same experience booking it quickly from the site just editing their preferred departure point and dates.

EP2218061-B1, granted to Routerank Ltd on 5-11-2014, discloses a method for proposing routes between a departure point and a destination point of a multi-modal network, based on a plurality of metrics and on user dependent preferences and profiles. The user preferences are preferably known in advance and may be determined based on previous user selections and/or behavior, the method thus reducing the complexity of and time necessary for computing a suitable list of candidate routes, by taking into account user preferences and criteria entered by the user during the computation for restricting the number of candidate routes to consider. The granted claim 1 of EP2218061-B1 recites:
A personalized real-time location-based travel management method, the method including the steps of: (a) defining a departure point and a destination point for multimodal travel, (b) computing in an IT system (30) a list of candidate routes between said departure point and said destination point, wherein a common IT system is available for computing candidate routes for different users; (c) making travel information relating to at least one selected candidate route available to a user's personal travel assistant (40) or a database (31) while traveling; and (d) detecting an unexpected event during said travel, and revising the selected route, computing a new route, computing only some route segments of the selected route or
computing an alternative list of candidate routes in response to said unexpected event; characterized by a step of computing a probability that a future connection will be missed or reached.

The system of the present invention instead provides a personalized travel planner which displays in real-time and before running the query only all the available travel options for that edited routes, not just generic filters or preference. The user preferences are known in advance and they are not determined based on previous user selections and/or behavior. This method thus reduces the complexity of and time necessary for computing a suitable list of candidate itinerary, by taking into account user preferences and criteria entered by the user during the computation for restricting the number of candidate routes to consider.

US20060184314-A1 discloses a multi-modal navigation system, providing navigation information (including routes, maps, directions, and navigation instructions) for a plurality of transportation modes including, but not limited to, automobiles, pedestrian walking, trains, subways, and the like. The multi-modal navigation system may be embodied in integrated navigation devices, as stand-alone navigation systems on a variety of computing devices, as a navigation service on a computing device or as a Web service, and the like. The multi-modal navigation system includes route data for a plurality of transportation modes. Route data for the plurality of transportation modes may be integrated, may be separately available, or any combination thereof.

The system of the present invention instead provides fare quotations for itineraries based on real-time availability of all the carriers and options included in the edited itinerary.

EP1516158-B1, granted to Koninklijke Philips Electronics N.V. on 8-8-2007, discloses an itinerary search method providing for computing the itinerary from a criterion defined by a user, for example, a point of departure and a point of arrival, and a step of selecting service providers along the computed itinerary, said services being defined by the user.

The granted claim 1 of EP1516158-B1 recites:
A system for computing an itinerary comprising at least a communication network, a user entity and a server entity, said user entity comprising: means for defining at least one itinerary search criterion and at least one service; means for sending an itinerary search request to said server entity via said communication network, said request comprising at least said search criterion and said service; means for receiving a response via said communication network;
means for presenting said response; said server entity comprising: means for receiving said itinerary search request; means for computing at least one itinerary from said search criterion by using a transport database, the computed itinerary traversing one or several zones each being of a certain type; means for selecting at least one provider providing said service and
fulfilling at least one proximity condition with respect to the computed itinerary by using a database of service providers, said proximity condition being adapted as a function of at least one of the following parameters: a transport mode, which has been defined as an itinerary search criterion, and the type of traversed zones; means for sending, to said user entity via said communication network, a response comprising the computed itinerary with localization of the selected provider.

The system of the present invention instead provides fare quotations for itineraries based on real-time availability of all the carriers and options included in the edited itinerary.

### Summary of the invention

Therefore it is the main object of the present invention to provide a method and electronic travel route building system, based on an intermodal electronic platform, which overcomes the above problems or drawbacks.

The electronic travel route building system of the present invention basically comprises the following functional modules. - Interactive user interface module.

User searches for travel solutions and builds its itinerary query, through a front end interface, filling some forms and selecting the real time displayed options made available for each entered route. User can select or drag&drop displayed graphical/textual options - for each route - into a timeline generated by the module which graphically appears with itinerary segments and dynamically updates at the time of editing or interaction.

Starting from data input by a user in a form with an origin and a destination, the system performs an instant search in a database to retrieve and display all the available information that user can select to filter results, to add services and options to quote, in order to get a suitable and relevant itinerary.

Then user can enter other data, such as departure/return date for each route, add other routes and the passengers number and age. - Search manager module.

Once user submits his query, search manager module starts a procedure to check if cached data are fresh and/or still valid for each segment of the itinerary also for applicable fare rules. If just one or more data need to be updated, the module asks other modules to retrieve requested data from a number of databases of providers and refresh data. Search manager module also checks if the entered itinerary may be compatible with similar-itinerary all-inclusive tours and packages retrieved automatically by the system. This procedure repeats also when a user changes or updates existing shared itineraries that are stored in the database after being saved or booked. - Harvesting module.

This module collects the data querying its own database and retrieves data from databases of external providers through web services connector modules which establish communications between the system and the travel service providers' servers. Each connector module sends to the relating provider database an availability request for a given itinerary, passengers and dates. Connector modules also clean, format and order the received data in order to provide them to the Injection module. - Injection module.

This module populates a graph database with the data retrieved by the harvesting module and the required information to build all possible and available itineraries. The module, through a carrier store procedure, collects data from Connector modules that categorize labelling with the type of carrier, and/or updates existing entities and/or creates new ones or just add new properties. - Seeker module.

This module performs operations according to the following algorithms.

Travel builder algorithm.

The Search Manager module asks the Seeker module to check if there's an itinerary that matches the query seeking all the possible relations between the attributes of the travel entities (nodes); so the travel build algorithm basically finds itineraries, linking nodes (segments), taking into account user's preferences and/or options to apply and/or fare/rate dependency. At this stage system manages the fare construction and finds those travel segments or services which can be properly combined with other services.

### Itinerary ranking algorithm.

Once the itineraries have been found by the travel build algorithm, the Itinerary ranking algorithm gives an order to the results to display thanks to the itinerary ranking algorithm, taking into account all the custom settings provided by the System or made available by the user. Once itinerary results are displayed, they can be further sorted, modified, or optimized by the user, and selecting one he can book and/or save in a personal area and/or share the chosen itinerary.

The Connector module is adapted to perform the following procedures:
- each connector receives the query parameters
- each connector analyzes the request to send to the provider's database according to its settings and splits the itinerary in segment routes
- connectors check which are the strategic points of departure and points of arrival around the given locations and add the strategic routes to the query
- connectors prepare all the supported queries to run on providers servers: the type of request (seats availability, fare quotations), the trip (oneway, roundtrip, multidestinations), the routes (also including strategic routes)
- connectors launch the query and send to the providers' servers the information needed to calculate a precise fare quotation (passengers, age, date, routes, etc).
- connectors get data from providers and parse the results
- connectors transform the parsed results in graph nodes of the itinerary segments of the timeline
- then pass nodes to Injection module to populate graph database

More particularly, the travel builder algorithm performs the following procedure:
- On the basis of the query inputs received, it queries the graph database to find all those relations between nodes which can match the request;
- If some data are missing or incomplete or not valid it asks the Search Manager module to retrieve new data and/or update it;
- Then it checks refreshed data again and if they are still incomplete ends the procedure;
- Otherwise it builds feasible and robust itineraries;
- If something goes wrong it communicates it to the Search manager module.

It is a particular subject of the present invention an electronic system for travel route building, adapted to build multimodal itinerary routes comprising data relating to starting location, target location, intermediate location nodes, segments connecting the intermediate nodes and the starting and target location, and in that it comprises the following electronic modules:
- a search manager module receiving requests for travel route building from an electronic client device comprising data relating to said starting location and target location, and managing the building up of a number of said multimodal itinerary routes comprising said starting location and target location, to be submitted to said electronic client device for selection of the travel route between said starting location and target location;
- a harvesting module, controlled by the search manager module to perform data queries in an internal relational database and in external service providers' databases to get data relating to alternatives for said intermediate location nodes, segments connecting the intermediate nodes, the data obtained from the external service providers' databases being stored in said relational database;
- an injection module populating a graph database with the data obtained from the harvesting module, to build up all possible multimodal itinerary routes between said starting location and target location;
- a seeker module, controlled by the search manager module, for searching said graph database to select among said all possible multimodal itinerary routes those matching selection criteria received from said electronic client device, obtaining selected multimodal itinerary routes, and ranking said selected multimodal itinerary routes according to ranking criteria; sending data relating to said ranked selected multimodal itinerary routes to said electronic client device for said selection of the travel route.

Another subject of the present invention is a method for travel route building, adapted to build multimodal itinerary routes comprising data relating to starting location, target location, intermediate location nodes, segments connecting the intermediate nodes and the starting and target location, and in that it comprises the following:
- search managing function, receiving requests for travel route building from an electronic client device comprising data relating to said starting location and target location, and managing the building up of a number of said multimodal itinerary routes comprising said starting location and target location, to be submitted to said electronic client device for selection of the travel route between said starting location and target location;
- harvesting function, controlled by the search managing function, performing data queries in an internal relational database and in external service providers' databases to get data relating to alternatives for said intermediate location nodes, segments connecting the intermediate nodes, and storing the data obtained from the external service providers' databases in said relational database;
- an injection function populating a graph database with the data obtained from the harvesting function, to build up all possible multimodal itinerary routes between said starting location and target location;
- a seeker function, controlled by the search manager function, searching said graph database to select among said all possible multimodal itinerary routes those matching selection criteria received from said electronic client device, obtaining selected multimodal itinerary routes, and ranking said selected multimodal itinerary routes according to ranking criteria; sending data relating to said ranked selected multimodal itinerary routes to said electronic client device for said selection of the travel route.

A further subject of the present invention is an electronic client device adapted to be used in the above described system, comprising an interactive user interface bidirectionally communicating with said electronic system, and comprising:
- means for sending to the electronic system data relating to said requests for travel route building, comprising said starting location, target location and selection criteria;
- means for receiving said data relating to said ranked selected multimodal itinerary routes;
- means for graphically displaying said ranked selected multimodal itinerary routes, as interactive timelines;
- means for modifying said selection criteria and selecting one or more of said ranked selected multimodal itinerary routes interactively communicating with said electronic system.

These and further objects are achieved by means of a method and an electronic travel route building system, based on an intermodal electronic platform, as described in the attached claims, which are considered an integral part of the present description.

### Brief description of the drawings

The invention will become fully clear from the following detailed description, given by way of a mere exemplifying and non-limiting example, also with reference to the attached drawing figures, wherein:
- Figure 1 shows a block diagram of the functional modules of the system in accordance with the invention;
- Figures 2 shows an example of interactive timeline of the itinerary route displayed on the screen of the user's terminal;
- Figure 3 shows a block diagram of a first embodiment solution of the hardware of the system;
- Figure 4 shows a block diagram of a second embodiment solution of the hardware of the system.

### Detailed description of the preferred embodiments

The invention relates to a computerized travel route building system and method based on an intermodal selling platform, accessible through an interactive user interface that enables users and travel agents to build, price (also fare construction) and book simple or complex itineraries in just one search and one charge. An exemplary computing system has a processor and a memory.

The system allows users to build their own itinerary, quote it quickly, book all in just one search and one charge, save and/or share it. System manages simple (e.g. unimodal or multi-modal one-way or roundtrip) or complex itineraries (e.g. multi-destinations, multimodal and so-called circle trip, open jaw, end-on-end etc.) through an intuitive and interactive graphical user interface accessible from desktop computer or mobile device and offers a complete toolkit for building and booking itineraries through all-in-one site.

Users access to an interactive graphical user interface - accessible from desktop computer or mobile device - that consists of a modular system: for each route users fill or edit (also vocally) a form field indicating at least a departure point and a destination point. The departing point can be also automatically geographically detected. At the time of the inclusion of the two end points, the system provides information, options and all the available preferences for that route thanks to an instant search which queries the database sending the origin and the destination in order to retrieve information on the means of transport available which connect the two points (e.g. high speed trains, companies, special services available upon request for instance pet or wheelchairs).

For each destination entered by the user, a graphical representation of the itinerary is made.

Thus users have the opportunity, even before entering the number of passengers and the departure/arrival date, to know in advance the available options for that route displayed in a graphical or textual way; they can select options or drag and drop them into an interactive area to be selected in order to choose their preferred transport company, and/or carriers, or combine the major transportations with the ancillary services (e.g. direct connections or combined carriers which contribute to reaching the destination by the origin).

Travel available options appear on the screen in real time at the completion of the filling of the required fields - as graphic icons or written - and user can select, deselect, drag in an active area representative of the itinerary built. An itinerary could be composed of one or more route and each route could be composed of one or more segments. For each segment/route user can apply his travel preferences/options and/or asks for accommodations quotation and/or other available services.

A segment may refer, for example, to a single flight with the same flight number. For example, if you travel from point A to B, change planes at B, and then travel from B to C, you will have flown two segments. On the other hand, if you travel from A to C and the flight stops at B, but you don't change planes, then your trip from A to C is one segment from the point of view of fare rules. (Note that the US federal segment tax defines both of these scenarios as two segments).

The user can also select, deselect, drag other types of options or preferences (travel classes, offers, packages, parameters such as ecological, faster, cheaper or special request as for instance pets, wheelchairs) and not only the type of carrier but also the shipping company, the name or type of the means of transport (e.g. Boeing instead of Alitalia or Frecciarossa train instead of Trenitalia train), ancillary services or accommodations, of which the system will take into account quoting the price of the route and calculating the number of nights for the available accommodations.

At the completion of each departure/arrival field, a graphical representation of the edited route can be created dynamically on the interface and a first indicative price could already be quoted on a stored data basis thanks to the raw information entered and / or available. As much as form fields are filled with travel data, the interactive graphic area updates in real time at the time or just after the information are filled: the interactive area, so-called the timeline, is represented by a path which includes all the travel data edited and/or added by the users: each origin and destination is represented as a node in the graph and a trip is represented as a path through a graph; accommodations, are treated as a pin or other icons or text.

A route is formed by an origin and a destination or more origin and more subsequent destinations. Each path represents a route which could be operated by one or more carriers (combined or not); each route may also be composed by one or more segments, one or more carriers, similar or different, one or more stops (e.g. exchange, transfer, stopover or carrier combinations, homogeneous or heterogeneous: train+train or taxi+train+flight).

For every filled search form with origin and destination of the route, the user can select, deselect, or just drag&drop into the timeline one or more travel options (that become available dynamically) or ignore them; thus he continue with the compilation of the forms with number and age of the passengers, dates of travel, add new route or submit the quotation of the itinerary for the price.

The system will use the data entered by the user to calculate a first estimation of the price on the basis of the information entered and / or the options selected in the first phase through the interface.

Once built the graphical and/or textual query to submit, the system starts querying its database for fresh but still valid cached data and Third Parties database for real-time data in order to get all the available information for the submitted query, the available connections for the itinerary and thanks to a special algorithm to build the requested itinerary, build each single route with direct (single) or combined carriers with each other, according to various entered parameters including but not limited to: origin, destination, location georeferenced, coincidences, number of changes, stops, stopovers, timetables departure and arrival times, seats availability (for transport subject to reservations if required), information in real time such deviations, strikes, weather.

Once the system retrieves the information needed for the submitted itinerary, even according to the user's preferences or options entered, builds all the available itineraries that meet certain requirements (e.g. data should be consistent, robust, walkable pedestrian path or feasible route) and display them to the user for his selection and booking. An itinerary could be booked directly on site with one charge/transaction or, if not possible, the system display which elements could be booked onsite, which not or redirect the user to the final vendor. Each travel provider, such as global distribution services (GDS, CRS), hotel reservation services (HRS) or transportation companies may have its own features even if they provides same contents. And each travel company may have its own peculiar travel conditions, their served routes, cancellation policies, schedules, fare rules, different age ranges for adults, children, infants and senior citizens, etc. which make planning of a travel through a network a very difficult task.

The system provides an intuitive and interactive interface that enables users to know - before submitting their travel query - which are the transport modes, the typology of accommodations, the available services, and the travel options available for a given city or route so they can easily express their preferences at the time of the building of the query in order to build a suitable multimodal itinerary, checking availability and price for all the selected items and/or options and/or preferences and/or services.

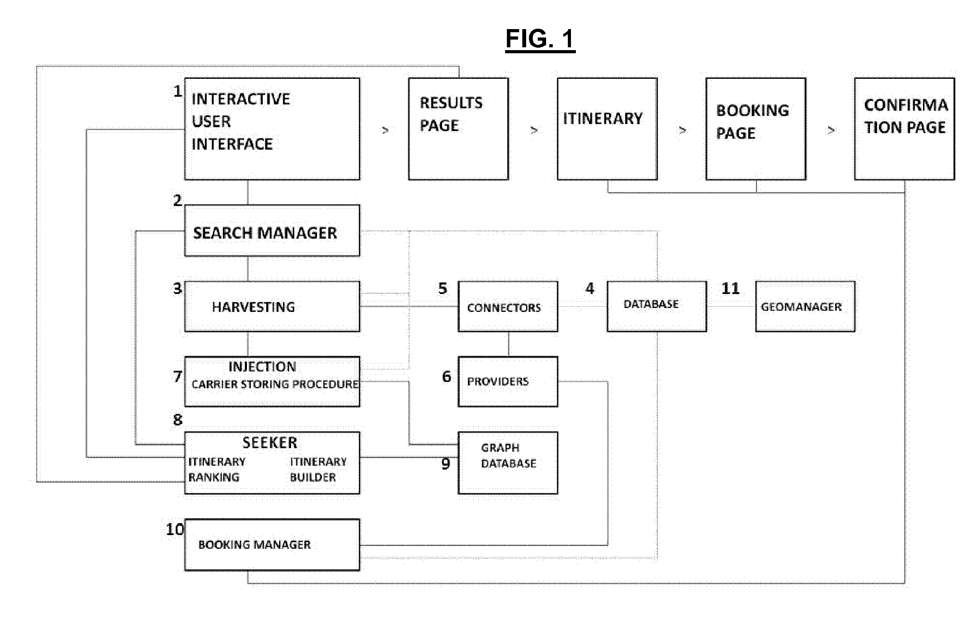

With reference to Figure 1, the travel route building system comprises the following functional modules, described in detail below:
- Interactive user interface 1;
- Search Manager 2;
- Harvesting 3;
- Injection 7;
- Seeker Algorithms 8;
- Booking Manager 10;
- Geomanager settings 11.

### Interactive User Interface module

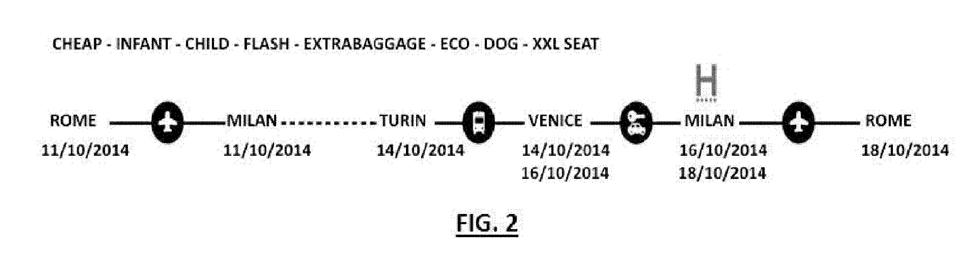

Thanks to the interactive user interface module 1, the travel route building system provides a graphical and/or textual representation of the travel query that appears and updates it accordingly the user's inputs interaction and the selected options and preferences dynamically displayed for each route. See for example the first line of blocks on Figure 1, showing a number of possible screenshots (results page, itinerary, booking page, confirmation page). The path of the travel route representing a timeline includes all the travel data edited and/or added by the users: each origin and destination is represented as a node in the graph and a trip is represented as a path through a graph; accommodations and other services/items are treated as a pin or other icons. An example of interactive timeline of the travel route displayed on the screen of the user's terminal is shown in Figure 2.

Users may select options to calculate itinerary, check availability and quote - as for instance - preferred carriers (last mile ones included) or companies, accommodation type, available ancillary services (insurances, etc.), or just drag & drop them into the timeline as well as travel options like nostop carriers preferences, faster or cheaper trips, number and typology of passengers (adults, seniors, children, infants), special requests (wheelchairs, pets), additional luggage or special baggage, etc.

Since transport companies consider different age range for constructing their fares, the system could require to fill the date of birth for each passenger included in the reservation in order to apply the correct fare. The passengers' age at the departure date should be the same as the itinerary's return date. For those reasons system requires date of birth in order to apply the corresponding applicable rate or fare for each different transport or services, and it also manages it even in case of different age owned by a passenger from the departure date to the return date.

The options, preferences and the available connections are retrieved in real-time for each route edited by the user and displayed at the time of the research form filling thanks to an instant search to a database. The system requires at least the filling of data relating to an origin (which can still be also detected automatically by a geolocation system) and a destination which can also coincide (in that case system retrieves all the services available in a given place e.g. Milan > Milan system provides local services like accommodations, car-rentals, Airbnb or Uber coverage, etc.). For each route, user can select, deselect or just drag&drop the desired preferences he wants the system calculates or the options he wants the system quotes and add to the booking cart. Available options and preferences are represented by icons, texts or both, into the timeline to get an instant approximate quotation. User can also change the order of the selected items to recalculate the trip. Then, when the user completes the building of the itinerary, he can submit the query to get a precise fare quotation of each item added or selected. If a user doesn't express any preference, the system suggest the best itinerary found across multiple variables and suggest available options to add to the booking. Users can also apply different variables to the different passengers included in the same reservation (which passenger needs wheelchair assistance or travels in a different class).

For some itineraries the system may require additional information in order to quote all the available services or carriers: for example in a given route the system find ferry connections and asks user to specify if he is travelling by car and wants to board his vehicle; in this case car model and its dimension maybe required to apply a proper fare.

Once the query has been submitted, the system in turn will query simultaneously its database and that of third party providers to build a feasible itinerary, get schedules, prices and availability of all the carriers or services included (for instance hotel accommodations, guided tours, etc). Then the system manages the retrieved information, organize them into unimodal and/or multimodal and/or intermodal itineraries in order to display all the travel solutions found that users can sort or filter or optimize then book and/and/or save or share.

Through its interactive interface a user can also share the itinerary built, saved or booked. The shared link - thanks to an url univocally associated to an itinerary number - allows the receiver to land on a page where he can view all the elements included in the reservation and the price quoted for a given date. The receiver can update the itinerary path if he wish to repeat exactly the same journey or he may modify all or just some parts of the itinerary as changing the city of departure or arrival, transportation modes, accommodations, the number of nights, adding or removing elements or passengers and recalculating the price and availability instantly. Thanks to this system feature any type of itinerary become shareable, which can in turn be voted, saved, booked or modified by changing the order of items with a simple selection or drag & drop or edit. If any elements of the itinerary at the time of the new quoting should not be more available, the system recalculates the itinerary by replacing the missing elements with others of a similar class, service and characteristics.

### Search Manager module

The Search Manager 2 is a query handler pre-computation module with a pivotal role around which a formation of other modules turns. It receives the submitted query from the front end interface and passes the request to the proper modules for their processing until it finds travel solutions to display.

Once search parameters are submitted through the user interface, the search manager module starts checking first the results among the cached data stored in its graph database using a query resolution module called Seeker: for instance if the data are fresh and valid (accordingly to a given set of parameters), if they are consistent and complete and if applicable fare rules match the request.

The concept of validity concerns many factors: for example the price factor that varies frequently as in the case of low fares and advance purchase, the seats availability factor, the applicable fare rules factor.

Cached data could be incomplete: for instance the paths from the point A to B and B to C have been stored, but if we are looking for the route from the point A to C, the system could return the route A>B>C which links departure point with the desired destination even if it is not a direct connection as the more relevant route A>C could be.

Moreover any transportation could be outdated or unavailable.

In other cases, the cache could be empty or the cache's check could be negative.

If the data stored in cache can't be used for the mentioned reasons and/or if they are not valid to build a route for any reason, Seeker reports it to the Search Manager who starts the Harvesting procedure to gather more and new information from providers.

In any case the Seeker reports to the Search Manager the outcome of its verification. Search Manager starts Harvesting procedure if data are incomplete, missing or outdated (availability, prices and checks for fare construction under a particular fare rule are double checked also by the Booking Manager module at the time of the reservation).

Otherwise, if the found data are eligible to be directly displayed, Search Manager asks the Seeker to extract them from the Graph Database, build and rank the itineraries to display to the user through a result page.

Particular attention is paid to the multi-destination itineraries so-called "tours" that are typically considered all-inclusive travel packages. Depending on the route entered by the user, the search manager procedure occurs even though there may be compatibility (in terms of routes, duration, dates and place of departure/arrival and other elements available for a proper comparison) between any available tour to be proposed to the user as a package in replacement of the purchasing of single tickets or services. If the system checks that the tour package covers just some parts of the itinerary entered by the user, the system connects the chosen itinerary with the tour and builds the missing segments according to the options that user might have entered. In this case the system can propose alternative packaged itineraries among its results since packages typically allow to save money even though they could apply restrictive fare rules.

### Harvesting module

The harvesting module 3 provides for functions of querying Providers (third parties web services, GDS, database, tour operators, others) to retrieve all the available data (e.g. transport connections) which link two or more places, their seats availability, applicable rules, fares and options in order to build all the possible travel itineraries between two or more points previously selected and determined. The system takes into account precise origin/destination points (as the ones typed by the users like a precise airport name) as well as all the available points of departure/arrival in a given geographical area.

There is provided a relational database module 4 used to store all the information needed by the system, as well as the geographical data, may be a set of different databases in one or different electronic machines, and include for example data stored in remote servers and retrieved over the Internet, for example using SOAP or another suitable technology. Data available in the database may be imported from various sources and converted in a common format that can be used by a software routing engine.

The purpose of this procedure is gathering the largest possible number of single or each-others combined carriers to build an itinerary made of single carrier travel segments; the concatenation of one or more segments forms a route; the concatenation of one or more routes forms an itinerary.

In general an itinerary could be considered as a set of transport modes also functionally combined with each other (the travel connection between two or more places) and their relative services (e.g. accommodations).

Unimodal approach relates to an itinerary travelled by homogeneous transport modes as for instance just flights. A segment path is always unimodal since it is formed by only one carrier. Multimodal approach relates to an itinerary travelled by inhomogeneous transport modes not combined with one another as for instance a roundtrip where the outbound path is travelled by flight and the inbound path by train.

Intermodal approach relates to an itinerary travelled by inhomogeneus transport modes combined with one another as for instance a single way where the connection from the point A to the point B is given by a combination of transport modes: a taxi from home to airport, then a flight from the origin airport to the destination airport, then a bus shuttle from the destination airport to the final destination.

Each travel provider must have web services to be integrated in the system.

A web service is a method of communication between two electronic devices over a network. It is a software function provided at a network address over the Web with the service always on as in the concept of utility computing. The W3C defines a Web service generally as a software system designed to support interoperable machine-to-machine interaction over a network. Two major classes of Web services can be identified:
- REST-compliant Web services, in which the primary purpose of the service is to manipulate XML representations of Web resources using a uniform set of stateless operations;
- Arbitrary Web services, in which the service may expose an arbitrary set of operations.

A Web API is a development in Web services where emphasis has been moving to simpler representational state transfer (REST) based communications. RESTful APIs do not require XML-based Web service protocols (SOAP and WSDL) to support their interfaces.

A Connector module 5 is provided. A Connector is a program that programmatically extracts data from the providers' databases (block 6) to the system platform and vice-versa. It allows the system to communicate bidirectionally or unidirectionally with provider servers.

There are quite literally hundreds of thousands of web services that have APIs enabling users to. A JSON/XML/SOAP Web API Connector, enables the system to more easily connect to many web services in a fairly straight forward and structured way. It is structured to give a great deal of flexibility in meeting high performances as it can make GET, POST, PUT or DELETE requests to any URL.

Each provider's server is connected to the system thanks to a corresponding connector. So each connector has its own settings and a peculiar query logic that allow it to proper communicate with the provider's servers and to correctly extract the data that are then formatted and made available by the system.

The connectors contact their connected providers' servers in order to get the required information. They can retrieve each kind of information needed and available (from provider side), for example a fare quotation for a given route, the applicable fare rules, a seats availability, the schedule. They are able to manage common booking request as well as specific tailored carrier/provider request.

In order to get a precise fare quotation they send to the providers the information they need to a proper fare construction, for example origins and destinations of a given itinerary, each departure and arrival date, number of passengers, age and/or age range and/or other classification (infant, child, adult), etc. They make also different requests to the same provider in order to get quotations for each single travel segment that system can freely manage to build itineraries with correct fares. For example, for a roundtrip (Milan > Rome > Milan) the train and the flight connectors retrieve availability and fare quotation for a given date and passenger, both for the Milan > Rome trip, then Rome > Milan, as well as for the roundtrip Milan > Rome > Milan. Sometimes some trip - due to applicable fare rules - cannot be split by the system in segments so it cannot combine them but it just sells as they are since a given fare applies to a given roundtrip. That's the reason why, if a trip is bundled, the system requires the fare quotation for the entire trip and also asks for the single quotation of each single segment of the trip. With this information, system can combine easily each travel segment with others and build itineraries.

Some providers already provide split segment quotations and proximity quotations (also for departure/arrival from/to close locations): connectors settings take it into account to retrieve only missing data if any.

In another embodiment system may know fare rules and/or availability and/or schedules so its connectors may queries providers only for retrieving missing data or to complete a reservation.

The Connectors work on the following basis:
- geographical proximity - typically when prompted for a connection between two or more places - the system searches for all the available POI (point of interests like stations, airports, hub, etc.) closer to the given places (by the users) and retrieves all the available connections departing/arriving from/to the latter. They can be managed by the GeoManager admin interface.
- own internal logic system as for instance the connection between cities and their related airports (for instance traditional online travel agencies consider the origin city name as the the departure airport only while system considers the origin also as a destination since it calculates also the public or private transportations needed to reach the given airport from the city center).
- own settings due to the geomanager configuration that selects (described below) the strategic car-rentals, coaches, ferries, trains stations or airports, etc. for a given area.
- route logic as for instance they may retrieve all possible combinations of fare quotations and/or availability for a given itinerary, for example splitting a roundtrip query in three requests to each carrier/provider: outbound + inbound + roundtrip.

The Connectors which get travel packages data from tour operators providers split the retrieved information so that the system can manage them in a proper way to build itineraries. In other cases the system required information (for example availability, prices, dates, arrival/departure places, number of stays, stop-overs) maybe imported manually instead of automatically.

Once connectors get data from providers, they parse the results and transform the parsed results into graph nodes (according to system requirements).

Then they pass the output to the Injection module which populates the graph database with the provided nodes, as described in more details below..

If the user building a trip selects in advance travel options like preferred carrier, the System optimize its resources and reduces the numbers of queries to third parties providers querying and focusing on just the selected carrier providers in order to retrieve availability and price. So the Seeker procedure (module 8) limits its effort to that carrier and builds less possible itineraries rather than finding all the available travel solutions. User can always change its preferences from the results list selecting more carriers. In that case the search procedure starts again and more queries are run if cached data are not available.

The system comprises the database module 4 for storing travel options, user preferences and profiles.

Data relating to available travel options are retrieved in real time at the time of the form filling and displayed to the user to refine its search or to personalize his travel. The data may include for example:
- Available carrier connections for a given route (e.g. trains, flights, coaches, ride-sharing for the Milan-Rome route or just trains and flight on London-Paris);
- Available carrier or last-mile connections for a given destination (e.g. if Uber service is available at Singapore or a ride-sharing service);
- Available accommodations for a given destination (e.g. hotels, villas or Airbnb coverage);
- Available guided tours and attractions at destination place (e.g. museum tickets or personal guide);
- Any items or services that can be available for a given route or destination and that can be sold or online booked (or what could be relevant for a user to know for planning).

Data on user preferences and profiles may include for example:
- User's preferred mode of transportation;
- User's memberships, fidelity cards, luggage or seat preferences, etc.;
- User's personal information.

Data on travel and user preferences may be stored in the database accessible by the IT system, as illustrated, and/or locally stored in the user's device (for example as a cookie). At least some of the available travel options or preferences can be displayed and/or selected and/or edited and/or computed via a web interface from the computer before submitting the search or made available at results time.

### Injection module

The Injection module 7 provides a carrier storing procedure for a Graph Database (module 9) population once travel data have been retrieved from providers.

Once Connectors have retrieved travel data from providers, the system creates carrier entities (objects which contain information about available carriers, the routes of the journey, seat availability, available options, fares, applicable fare rules, stops, etc.) which are gathered, labelled and organized, injected and stored in the graph database through a carrier store procedure.

A carrier store procedure in the Injection module aims to collect data from Connectors, categorize and label them, update existing entities or create new ones or just add new attributes. This procedure can get to handle a huge amount of entities and corresponding attributes. Injection procedure may create new carrier entities (node) if none is already present in the database or alternatively update/refresh all the changeable data properties like fares or vendors if already present.

For example transports modes are split into two different categories according to their travel direction:
- Scheduled transport, which travel in just one direction per ID carrier number (e.g. flights with flight number);
- Bidirectional carriers: which may travel in both directions which can be taking into account for calculation without a precise direction (e.g. typically cars, bikes, walking, ancillary or last mile services like ride-sharing, taxi, etc).

Anyway, transport modes could be also labelled as public or private transport, by mean of transport, direct or with stops, etc. depending mainly on the number of attributes that providers provide.

Without limitation the main attribute data stored in the database may be the following:
- origin and destination;
- means of transport;
- company and/or vendor;
- departure/arrival time, duration and date;
- departure/arrival points;
- number of stops if any and which;
- travel classes, travel options, fare rules.

Some travel solutions are considered bundled only: for instance special fares for same company roundtrip or opaque fares (typically reserved to tour operators) for hotel packages. In this case the carrier entities involved are marked with a special tag e.g. *dealcode* (if it bundles a given outbound with the inbound solution), *package* (if it allow booking manager to sold bundled with other services like accommodations, rentals, etc.), *tour* (if the carrier connections through the routes of a given itinerary makes part of a bundle with or without other services like accommodations, insurances, etc.).

### Seeker module

The Seeker 8 is a query resolution module which manages the graph database module 9. This module is activated by the Search Manager both to check cached data (e.g. availability, consistency, freshness) and to build, rank and display itineraries.

Once Search Manager module 2 ended the required checks on cached data or the Graph Database module 9 has been populated with a consistent number of updated or brand new carrier or entities by the Injection module, the Search Manager asks the Seeker to extract or build the required itineraries.

Seeker building procedure is mainly based on two different algorithms which work together to provide more relevant travel solutions to users: the itinerary builder and the itinerary ranking. Both algorithms may take into account the options and/or preferences selected by the users. Options and preferences can be differently applied by the users to each segment, route, itinerary in any order. Users may also select preferences that apply to the specific travel they are currently planning, and which may be different than their general preferences as stored in system Database through their user area.

Seeker algorithm searches all the possible combinations of connections between at least two points applying not-editable filters. If departure and arrival coincide, Seeker displays just the available local services nearby a given place and it doesn't search for connections or build itineraries between different points.

Seeker is implemented as an unmanaged graph extension Java developed algorithm based on native Traversal framework (Neo4j libraries) which manages the data collected in the graph database 9. The graph database is a database that uses graph structures for semantic queries with nodes (also known as vertices or points), edges (are also called arcs or lines), and properties (attributes) to represent and store data. The graph database is a storage system that provides index-free adjacency and a graph is a representation of a set of objects where some pairs of objects are connected by links. This means that every element contains a direct pointer to its adjacent elements and no index lookups are necessary. The Graph database is based on graph theory. The Graph database employs nodes, properties and edges:
- Nodes represent entities such as points of interest - POI (locations as airports, stations, addresses, etc.), carriers, services, or any other item System wants to keep track of.
- Properties are pertinent information that relate to nodes. For instance, if "POI" were one of the nodes, one might have it tied to properties such as IDs, coordinates, names, country code, geonameid, featureCode, locale, wikiLink, depending on which aspects of "POI" are pertinent to the particular database. Carriers' entities may be: origin destination, agency, duration, price, departure Date, id, vendors.
- Edges are the lines that connect nodes to nodes or nodes to properties and they represent the relationship between the two. Most of the important information is really stored in the edges. Meaningful patterns emerge when one examines the connections and interconnections of nodes, properties, and edges.

It has been found that in the framework of the present invention, compared with a relational database, a graph database is faster for associative data sets and map more directly to the structure of object-oriented applications. It can scale more naturally to large data sets as it does not typically require expensive join operations. As it depends less on a rigid schema, it is more suitable to manage ad hoc and changing data with evolving schemas. Conversely, relational databases are typically faster in performing the same operation on large numbers of data elements. In fact the Graph databases are a powerful tool for graph-like queries, for example computing the shortest path between two nodes in the graph. Other graph-like queries can be performed over a graph database in a natural way (for example graph's diameter computations or community detection).

An undirected graph consists of a set of vertices and a set of edges (unordered pairs of vertices), while a directed graph consists of a set of vertices and a set of arcs (ordered pairs of vertices). In a diagram of a graph, a vertex is usually represented by a circle with a label, and an edge is represented by a line or arrow extending from one vertex to another.

The Seeker finds nodes and their related relations for the given locations (for example origin and destination or a complex itinerary).

Default algorithm settings allow to build feasible itineraries: they are based on logical rules like the departure and return date (e.g. which can't be before the departure), the carrier lifetime (the time duration after which we consider the information contained in a carrier expired), the progressive departure time integrity that skips those transport modes that depart before the arrival of the previous ones, the minimum time needed for transfers (carriers' change, a connection route from a given origin to a given destination), the filter on those paths that contain more than two ancillary carriers (last mile carriers as car, taxi, bus) and the filter that discards cyclic paths.

Then the seeker finds out a list of eligible routes, depending on the query searched, filters and options applied: for example simple one-way, roundtrip (outbound + inbound path), multi-destinations (as well as open jaw, circle trip or end-on-end), all composed by just single or combined carriers (same kind or different).

Roundtrip solutions are combined using outbound and inbound carriers with the same fare basis deal code or using carriers which are not labelled neither outbound nor inbound as deal code (bundled).

At this stage, all the collected data are stored in a short-lasting cache, formatted, paged and displayed; users may also apply new or additional filters or sorting/display options, from the frontend interface without limitation, such as data on:
- carrier name, company or transport mode;
- departure/arrival time and duration;
- numbers of stops / direct connections;
- departure/arrival point of interest;
- transfer time;
- cheaper, faster, greener (less CO2 consumption), more comfortable (single, family, with pets, wheelchair, etc.);
- unimodal, intermodal, multimodal;
- travel class, special offers, packaged, loyalty offers.

A multimodal itinerary is a route made up of different transport segments that are travelled using different carriers.

For instance there could be tons of different itineraries between a departure point "A" to the destination point "B", such as:
- pedestrian path on foot between point "A" and the closest bus station;
- then bus connection from bus station to the airport or station;
- 1stop flight or direct connection by train from airport or station to destination;
- then taxi or car rental from airport or station to destination "B".

If the user is travelling a multi-destinations trip, this basic procedure is repeated several times for each route.

Seeker itinerary builder algorithm builds optimal transit itineraries in terms of many data-factors (duration, price, transfer, stop, user's preferences, departure from main and well connected stations/airports and others, walking path, etc.) that can be used to build an itinerary made by one or more routes. Each route comprises directions from a starting location to a destination location using single or combined, private and/or public transportation and it may include walking path. The route describes which transit stations are to be used for the journey, as well as any transfers to one or more different transit vehicles (including transfers between different types of carriers) that need to be made in order to reach the destination. The transit information stored in the graph database or retrieved from providers describe trips between one or more locations using any direct transport modes or combined.

The transit information contains data such as :
- schedule information (arrival and/or departure time from a given departure/arrival places);
- geographical coordinates of any location associated with the trip (as well as IATA codes, other International associated standard classification, address, original name, other languages names);
- price quotation and fare rules for a given departure and return date for a given transport mode and its combinations;
- seat availability if required or mandatory for booking;
- transfer time, duration and number of stops;
- transport company names;
- type of transport or services (ferry, flight, train, ride-sharing, car, etc.);
- airports, stations and other departure/arrival locations associated with the trip in a given area range;
- some solution may be tagged as bundled if a travel package is applicable;
- identification number or other unique number (e.g. flight number, when combined with the name of the company and the date, identifies a particular flight);
- other tag or data provided by the providers;
- query time;
- CO2 consumption.

Seeker algorithm processes the transit information to determine optimal transfer patterns that describe routes between any two locations and to build all the possible itineraries or just to customize itineraries if users expressed any selection. The transfer patterns describe where transit vehicle transfers are made along each journey. Thus, the system determines the best route possible for any given pair of locations retrieving fresh data from providers if cached data do not satisfy freshness rules applied by the System. The travel data changes rapidly as schedules and prices are modified and seats sold. Typically only a portion of the database changes over any short time period, so the validity of an answer may be directly dependent on the time the query was posed. The query time can be used as a substitute for the purchase time, in advance purchase calculations; the validity of a query result is directly dependent on the query time. The query time is an implicit part of the query.

To determine the optimal itinerary, the system generates a transit graph and its associated transit properties that represent information of the transit graph in table form. A transit graph is a representation of a set of locations where some pairs of locations are connected by links. The Seeker, thanks to its algorithm based on mathematical abstractions which takes into account users selections - if any -, gives a logical sense and order to all the possible links between locations and build the interconnections. So the transit graph is a representation of possible trips specified by the transit information for the given dates. To represent an itinerary in the transit graph, the system retrieves transit information for each route of the itinerary, starting at a first given departure point and ending at a second station in the trip, and so on for the following routes. The Seeker builds up the transit graph based on the transit information and their availability associated with the trip. For each arrival and/or departure of a transport modes at the location or nearby, the Seeker system considers as a node those locations linked by travel segments at a particular day and time for a given transport mode.

The Seeker algorithm takes into account all the travel segments stored in the database that can be considered as eligible itinerary according to its computation: single segments and/or subsequently combined. For the same route the system can find direct connections made by just one segment as well as combined segments which cover the same route.

The Seeker computes only those segments compatible with submitted query (dates, passengers, routes, selections, etc.) and valid according to parameters like:
- real time seats availability or still considered valid;
- applicable fare rules;
- route connections availability (not in real time) operated by transport modes without any direct connection to carrier's server or travel provider (typically imported data of carrier connections for a given route which information system uses to build itineraries and provides to its users; in some cases system allows online reservation thanks to travel agents or automatic procedures who finalize bookings on behalf of the user's request on the carrier websites if they provides online booking system or thanks to direct agreements);
- compatible all inclusive tours (similar legs, stops) or packages also with parts of the itinerary. In that case system computes segments needed to join or complete the tour knowing its stops.

Then Seeker connects at least two or more nodes if its algorithm settings are satisfied (e.g. skipping those transport modes that depart before the arrival of the previous ones, considering the minimum time needed for transfers) using direct segments that describe a route of the itinerary to a target node from a source node with no transfers. The Seeker uses the transit information associated with each segment to determine all the computable information, for instance, the duration and the cost for each itinerary.

The Seeker, in order to build an itinerary, looks for direct connections (no stop or with stops) and/or takes also into account all the different kind of segments subsequently combined in routes. No matter the transport mode at this stage but the itinerary. In case of combined itineraries, Seeker considers those carriers which arrive and depart to the same or nearby location. In any case the system calculates the time required for the change or the transfer. Obviously the departure time of the following means of transport must be after the time of arrival of means of transport, taking into account in the computation also the time necessary for the change by foot or other way.

If the interchange point is the same place, the system calculates a reasonable period of time taking into account the dimension on the place (e.g. international airport hub), the time required for check-in or security check controls, and other information which could be retrieved or computed.

If the interchange points are different and located in proximity - reasonably close in terms of walking distance - the system considers this segment as walkable if there is no public or private transport who connects the two end points and is not considered as a segment. In this case, the system calculates the distance in kilometers between the two end points and calculates the time needed to reach the departure location by foot or car. Thanks to a proximity search performed around the arrival/departure locations for a given distance range, System may know if there is any private or public transport or service as car rental, car sharing, black car, taxi, ride-sharing which can connect the locations. If so, it considers this connection as a segment. Concerning car-rental services (or similar services which need to return the vehicle), for example, the System checks that there's a pick-up location and a different return location nearby the origin and the destination.

If a user specifies preferred carriers or other options, the System takes them into account for a more relevant computation. If a user specifies just some carriers to travel a route, the System combines the selected carriers - if needed - with missing travel segments in order to fulfill a complete travel itinerary from the origin to the destination.

Once the itinerary builder algorithm finds all the available itineraries for one or more routes for a given date, number of passengers and selected options or preference if any, the itinerary ranking algorithm provides to assign a rank to each itinerary displaying results in many possible ways: user can choose to view results sorting them by cheapest, faster, most rated, CO2 consumption or displaying them by multimodal (comparing main different transport mean connections like flights versus trains which operate same routes) or intermodal (including last mile carriers) or filtering them with many parameters for each segment/route/itinerary (e.g. companies, departure time, arrival time, carriers, class, number of stops, duration, packages, special offers, etc.).

The Itinerary Ranking algorithm can also take into account data relating to personal information or saved settings if available (e.g. user logged in) and it may be affected by real-time events or statistics, if provided, as for example:
- ancillary services or accommodations availability in case of two or more days trip;
- available travel insurance;
- customer fidelity programs on some segments;
- flexible fares or not-refundable;
- geolocalisation services which gives realtime user position;
- itinerary matching with packaged tours;
- other data collected from past travels of previous or current users;
- preferred companies or point of destination/arrival;
- preferred mode of transportation;
- slot metrics (frequent historical delays on a given route/schedule);
- social network connections (if user logged in with social networks like Facebook or Linkedin, etc.) that are going to travel same or similar trip;
- sponsored segments by travel companies;
- traffic or weather conditions/forecast.

### Booking Manager module

The Booking Manager module 10 manages the booking reservation data related to a journey in order to confirm passengers, carriers availability, seats, price, accommodations, packages (dynamically built or featured) and all included services to the different travel providers after user payment has been positively processed.

The Booking procedure is as follows:
- creation of the booking object (shopping cart) through the connectors to the reservation systems involved;
- creation of the method of payment through the payment gateway;
- payment confirmation from the user's credit card (or other payment methods accepted);
- booking confirmation to the providers and/or travel agents (if they have to book tickets on behalf of the user on carriers' websites);
- saving the data in the database of the reservation;
- booking confirmation to the users.

The system is optimized for managing multiple simultaneous connections to different providers in order to retrieve data and confirm reservations in just one charge (unique payment). It allows purchase of complex booking cart like itineraries made of single or multiple tickets/bookings and/or accommodations and/or ancillary services (travel insurance, travel related items or services, rentals, etc.). It also allows to add to the cart and booking services which are not provided by web services or other dynamic connections or do not require an advanced payment but just credit card guarantees: for example users can book online also bus tickets for those companies that are not distributed via web-services or GDS or CRS but their booking data concerning schedules and prices has been imported manually or automatically into the system so, after the payment, a travel agent or an automated procedure (e.g. web scraping) may finalize the booking of the requested ticket on behalf of the user on external websites.

Some carriers as for instance so-called *last mile carrier*, typically local companies, are not usually globally distributed. Sometimes they do neither provide API web services nor websites with online reservations. So it's not possible for many online travel agencies or GDS to distribute them and let users or travel agents to book online from their TPS. Users and travel agents can always try to book tickets or a ride directly from their sites if available. Anyway the system can manage the lack of information between those travel services and their online distribution also allowing online booking just importing into its database all the available information automatically (via web scraping methodology) or manually (data entry). Through the system of the present invention it is possible to populate the database also with carriers information which the Seeker module uses to build itineraries. The data that can be imported to allow a booking are:
- Company name
- Transport mode (e.g. taxi, bus, train)
- Departure point (name, address, geographical coordinates)
- Arrival point (name, address, geographical coordinates)
- Address website (URL)
- Online reservation availability (if website allows it)
- Estimated price (or as it is as shown in the site)
- Schedule
- Departure time
- Arrival time
- Duration
- Timetable to import or provide from/to time, operating days, exceptions, updated on, valid until.

The Seeker module can always build itineraries and shows connections using imported data (that could be less reliable than others provided by travel providers or GDS). If some data (e.g. departure/arrival time) are missing, the Seeker can display there is a possible connection for a given route.

If one or more travel segments are tagged as *salable* (when carrier's websites allow online reservation) the Booking Manager can allow the online sale and the user can book online through the system also the tickets for last mile carriers (or those carriers not distributed by third parties). The user once he has confirmed the itinerary and paid his booking which includes imported last mile carriers, will receive the booking confirmation also for those segments thanks to a travel agent (or an automated process) who will book the tickets on his behalf for all the passengers included on this booking.

If any transit information is not available or not updated, it may be determined from statistics based on information retrieved from previous queries on each segment or estimated based on distance or gas consumption for example.

### GeoManager settings module

The GeoManager module 11 performs the tasks relating to the way the system should consider places and points of interests stored in its databases.

Each time a departure or arrival point is given, the system can include or exclude multiple departure/arrival options through the GeoManager interface. Through this procedure it is possible to set for example the most relevant (strategic or closer) train or bus stations, ports and airports to include for each place in the results. The system is then able to exclude proximity searches that sometimes are not relevant or inaccurate in favor of more reliable and relevant data, improving, from one side, the overall quality and consistency of the information displayed and, from the other side, the system performances. For example if a user asks for a generic trip from Milan to Rome, without specifying any precise point of departure or arrival, the system takes into account for its computation all the train or bus stations as well as the airports located at a given range far from the center of Milan and Rome. So for example the system can also take into account the Bergamo's airport since it can be considered strategic for departures from Milan.

This invention relates generally to computerized multimodal travel route building systems using different transportation modes (such as plane, train, car, bus, metro, taxi, ride sharing, foot, etc. proposed by various travel providers) and in addition to pricing for itineraries using travel planning computer systems.

The invention uses two different databases: the first one is a cross-platform document-oriented relational database (4) and the second one is a graph database (9).

The document-oriented database 4 stores all the website data - like data system, translations, booking data and users information - and the geographical data of each point of interest (place, station, airport, etc.).

The graph database 9 stores all the carriers/routes information used to build reliable, affordable, available itineraries.

The Databases are accessed (writing and/or reading permission) by the following procedures: Connectors, Injection, Search Manager, Booking Manager and the GeoManager.

The invention also relates to an improved method and system for building multi-modal routes between a departure point and a destination point, based on a plurality of transport modes and on user-dependent options, preferences and profiles as well as a method to check availability and provide local services (e.g. accommodations, black cab services like Uber, cities covered by Airbnb). User travel preferences are preferably known in advance at the time of the research filling and may be determined based on previous user selections and/or profile. Generally speaking a travel segment is a connection between two nodes (or geographical points) that can be travelled by a user, using one specific transportation mode (e.g. a single flight with the same flight number).

An itinerary generally relates to a set of one or several mutually connected segments by which users can travel from one origin to one destination.

A multimodal itinerary relates to a set of one or several mutually connected segments made up of different segments that are travelled using different transportation modes.

Unimodal itinerary generally relates to an itinerary made up of same-kind carriers (only flights, only trains, etc.) for any segment.

Multimodal approach considers itineraries made up of different-kind carriers (e.g. trains, flights) for any segment.

An itinerary from an origin to a destination may be travelled with just one carrier or a combinations of same-kind or different carriers (e.g. taxi+flight+train).

The system merges multimodal transportation approach with dynamic packaging in order to find the best travel solution and fare quotation combining multimodal itineraries with other services like accommodations, attractions, enabling users to determine his own travel preferences.

The system significantly simplifies the travel searches reducing the complexity of surfing across many websites and checking different systems providing all-in-one travel planning solution. It also reduces the time necessary for building and computing a suitable list of itineraries, by taking into account multi-modal routes and accommodations, tours, other features accordingly to user preferences if entered by the user during the computation for restricting the number of candidate itineraries to quote.

Selection or exclusion of any of those options or preferences significantly reduces the number of suitable itineraries to evaluate and booking in just one charge during subsequent steps.

The list of itineraries proposed by the system maybe user dependent (and depend on the user preferences selected or stored) or computed directly by the system.

The system could behave differently displaying the itineraries accordingly to user selections:
- The display of itinerary results may be dependent from the selections made by the user at the time of the travel search building: if a displayed option, then selected by the user, should not be available anymore, the system ignores the selected preference and still shows those results closer to the selection made (thanks to its algorithm) or those deemed most relevant for that route or itinerary.
- If users do not select any options, the system finds the best suitable and independent (without any pre-selection of criteria) travel solutions accordingly to its algorithm (which gives a weight to each itinerary element and calculate a score) that takes into account best seller/rated itineraries, feasible and robust routes, flights and/or high speed trains presence, price/duration ratio, number of stops, special offers, package availability, slot metrics (probability of delays based on historical data for a given carrier for a given schedule during a specific time period). Users can always filter, sort, add items to the results at any stage of the search or booking funnel.
- If users do not make any selections but user preferences and/or user profile is available (e.g. user logged in) the system takes into account them and shows results dependent from user's available information.

As far as the details of the method of the invention are concerned, it should be appreciated that the skilled in the art derives, without inventive activity needed, all the necessary implementing information from the above description of the system features.

An exemplary embodiment of the system of the present invention is implemented by way of a software architecture and a hardware architecture, as described below.

### Software architecture

Software architecture is the high level structure of a software system, the discipline of creating such structures, and the documentation of these structures. It is the set of structures needed to reason about the software system, and comprises the software elements, the relations between them, and the properties of both elements and relations. Software is any set of machine-readable instructions that directs a computer's processor to perform specific operations.

Common languages and open source solutions have been preferred to develop the system. The programming code languages used for the backend infrastructure are: PHP, Java, Javascript, HTML 5.

The programming code languages used for the frontend infrastructure are: PHP, Java, Javascript, HTML 5, CSS, Ajax, RequireJS.

The used frameworks are:
- Symfony: it is a PHP web application framework for MVC applications. Symfony is a free software and released under the MIT license. It aims to speed up the creation and maintenance of web applications and to replace repetitive coding tasks.
- AngularJS, commonly referred to as Angular: it is an open-source web application framework maintained by Google and a community of individual developers and corporations to address many of the challenges encountered in developing single-page applications. Its goal is to simplify both development and testing of such applications by providing a framework for client-side model-view-controller (MVC) architecture, along with components commonly used in rich internet applications.

The used libraries are:
- Backbone.js: it is a JavaScript library with a RESTful JSON interface and is based on the model-view-presenter (MVP) and Actor model application design paradigm. Backbone is known for being lightweight, as its only dependency is on one JavaScript library, Underscore.js. It is designed for developing single-page web applications, and for keeping various parts of web applications (e.g. multiple clients and the server) synchronized.
- Bootstrap: it is a free collection of tools for creating websites and web applications. It contains HTML and CSS-based design templates for typography, forms, buttons, navigation and other interface components, as well as optional JavaScript extensions.
- The Doctrine: it is a set of PHP libraries primarily focused on providing persistence services and related functionality. Its prize projects are an Object Relational Mapper (ORM) and the Database Abstraction Layer it is built on top of. One of Doctrine's key features is the option to write database queries in a proprietary object oriented SQL dialect called Doctrine Query Language (DQL).

The repository used is GitHub, a web-based Git repository hosting service, which offers all of the distributed revision control and source code management (SCM) functionality of Git as well as adding its own features.

### Hardware architecture

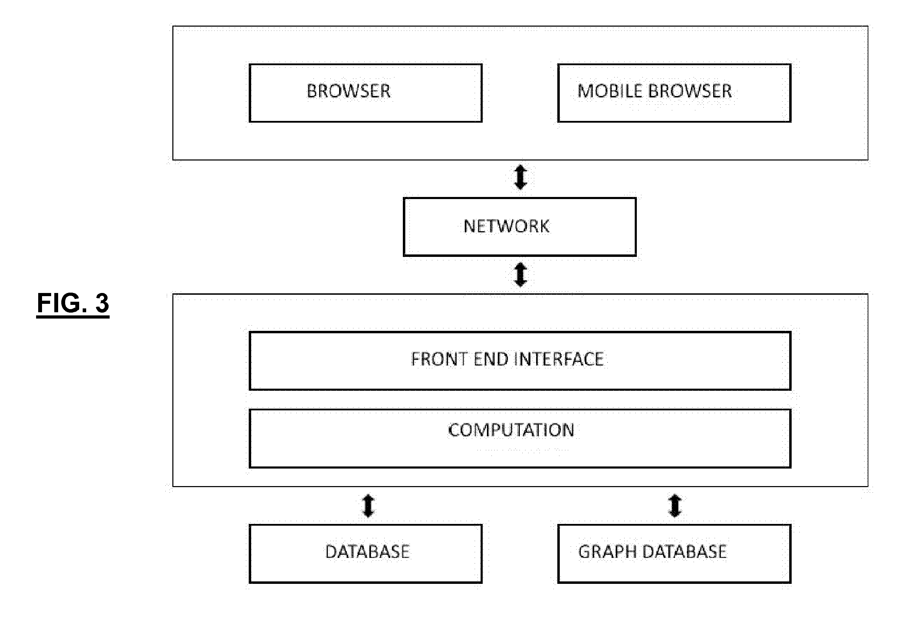

In one embodiment, the hardware figure 3 illustrates the hardware architecture used for a user that accesses the system through a computer or mobile device's browser. The frontend interface and the related modules are hosted on cloud computing service and from here they can access to external database resources.

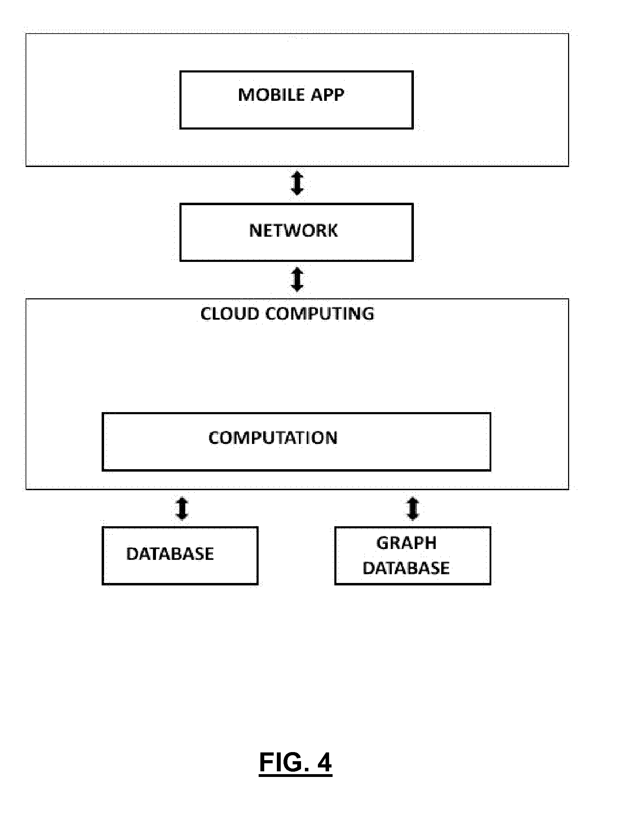

In another embodiment, the hardware figure 4 illustrates the hardware architecture used by a user that accesses the system through a mobile App (e.g. iOS or Android app). In this case a mobile optimized version of the frontend interface is hosted by the user's mobile device. He needs to download the app through the dedicated stores (e.g. iTunes). The related computing modules are hosted on cloud computing service and from here they can access to external database resources.

The system runs on cloud computing service since it provides a large computing capacity (potentially many servers) much faster and cheaper than building a physical server farm. An example of cloud computing service is Amazon Web Services (AWS), a collection of remote computing services, also called web services, that make up a cloud computing platform by Amazon.com. The most central and well-known of these services are Amazon EC2 and Amazon S3.

The system runs on the two above described databases, the document-oriented database 4 and the graph database 9, i.e:
- MongoDB (from "humongous") is a cross-platform document-oriented database. Classified as a NoSQL database, MongoDB eschews the traditional table-based relational database structure in favor of JSON-like documents with dynamic schemas (MongoDB calls the format BSON), making the integration of data in certain types of applications easier and faster. Released under a combination of the GNU Affero General Public License and the Apache License, MongoDB is free and open-source software.
- Neo4j is an open-source graph database, implemented in Java. The developers describe Neo4j as "embedded, disk-based, fully transactional Java persistence engine that stores data structured in graphs rather than in tables". Neo4j is the most popular graph database. In Neo4j, everything is stored in form of either an edge, a node or an attribute. Each node and edge can have any number of attributes. Both the nodes and edges can be labelled. Labeling is useful, because you can narrow down your searching area using the labels. In the previous versions of Neo4j node indexing was supported. The current version does not have such a provision.

The method of the present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

The elements and characteristics described in the various forms of preferred embodiments can be mutually combined without departing from the scope of the invention.

Further implementation details will not be described, as the man skilled in the art is able to carry out the invention starting from the teaching of the above description.

## Claims

1. An electronic system for travel route building, **characterized in that** it is adapted to build multimodal itinerary routes comprising data relating to starting location, target location, intermediate location nodes, segments connecting the intermediate nodes and the starting and target location, and **in that** it comprises the following electronic modules:
- a search manager module (2) receiving requests for travel route building from an electronic client device comprising data relating to said starting location and target location, and managing the building up of a number of said multimodal itinerary routes comprising said starting location and target location, to be submitted to said electronic client device for selection of the travel route between said starting location and target location;
- a harvesting module (3), controlled by the search manager module to perform data queries in an internal relational database (4) and in external service providers' databases (6) to get data relating to alternatives for said intermediate location nodes, segments connecting the intermediate nodes, the data obtained from the external service providers' databases being stored in said relational database (4);
- an injection module (7) populating a graph database (9) with the data obtained from the harvesting module, to build up all possible multimodal itinerary routes between said starting location and target location;
- a seeker module (8), controlled by the search manager module (2) for searching said graph database (9) to select among said all possible multimodal itinerary routes those matching selection criteria received from said electronic client device, obtaining selected multimodal itinerary routes, and ranking said selected multimodal itinerary routes according to ranking criteria; sending data relating to said ranked selected multimodal itinerary routes to said electronic client device for said selection of the travel route.

2. The electronic system for travel route building as in claim 1, wherein said harvesting module (3) comprises a connector module (5), bidirectionally connected with said external service providers' databases (6), and comprising means for performing the following operations:
• receiving the query parameters;
• analyzing the request to send to the provider's database according to its settings and splits the itinerary in segment routes;
• checking which are the strategic points of departure and points of arrival around the given locations and adding the strategic routes to the query;
• preparing all the supported queries to run on providers servers;
• launching the query and sending to the providers' servers the information needed to calculate the parameters of the itinerary;
• getting data from providers and parsing the results;
• transforming the parsed results in data relating to graph nodes of the itinerary segments of the timeline;
• passing said data relating to graph nodes to said injection module (7) for populating said graph database (9).

3. The electronic system for travel route building as in claim 1, wherein said injection module (7) comprises means for populating said graph database (9) by means of a carrier store procedure creating carrier entity objects containing data relating to said itinerary routes which are gathered, labelled and organized, injected and stored in the graph database, in the form of nodes, properties of the nodes, and edges as lines connecting nodes.

4. The electronic system for travel route building as in claim 1, wherein said seeker module (8) comprises:
- means for performing an itinerary building algorithm for searching said graph database (9) to select among said all possible multimodal itinerary routes those matching selection criteria received from said electronic client device, obtaining said selected multimodal itinerary routes,,
- means for performing an itinerary ranking algorithm for ranking said selected multimodal itinerary routes according to ranking criteria either received from said electronic client device or deriving from said external service providers' databases (6) or said relational database (4).

5. The electronic system for travel route building as in claim 1, wherein said multimodal itinerary routes comprise data relating to different kinds of transport modes, to be combined for building said selected travel route comprising homogeneous , or inhomogeneous transport modes in the segments of said selected travel route.

6. A method for travel route building, **characterized in that** it is adapted to build multimodal itinerary routes comprising data relating to starting location, target location, intermediate location nodes, segments connecting the intermediate nodes and the starting and target location, and **in that** it comprises the following:
- search managing function, receiving requests for travel route building from an electronic client device comprising data relating to said starting location and target location, and managing the building up of a number of said multimodal itinerary routes comprising said starting location and target location, to be submitted to said electronic client device for selection of the travel route between said starting location and target location;
- harvesting function, controlled by the search managing function, performing data queries in an internal relational database (4) and in external service providers' databases (6) to get data relating to alternatives for said intermediate location nodes, segments connecting the intermediate nodes, and storing the data obtained from the external service providers' databases in said relational database (4);
- an injection function (7) populating a graph database (9) with the data obtained from the harvesting function, to build up all possible multimodal itinerary routes between said starting location and target location;
- a seeker function (8), controlled by the search manager function (2), searching said graph database (9) to select among said all possible multimodal itinerary routes those matching selection criteria received from said electronic client device, obtaining selected multimodal itinerary routes, and ranking said selected multimodal itinerary routes according to ranking criteria; sending data relating to said ranked selected multimodal itinerary routes to said electronic client device for said selection of the travel route.

7. The method as in claim 6, wherein said harvesting function (3) comprises a connector function (5), bidirectionally cooperating with said external service providers' databases (6), and performing the following operations:
• receiving the query parameters;
• analyzing the request to send to the provider's database according to its settings and splits the itinerary in segment routes;
• checking which are the strategic points of departure and points of arrival around the given locations and adding the strategic routes to the query;
• preparing all the supported queries to run on providers servers;
• launching the query and sending to the providers' servers the information needed to calculate the parameters of the itinerary;
• getting data from providers and parsing the results;
• transforming the parsed results in data relating to graph nodes of the itinerary segments of the timeline;
• passing said data relating to graph nodes to said injection module (7) for populating said graph database (9).

8. The method as in claim 6, wherein said injection function (7) comprises populating said graph database (9) by means of a carrier store procedure creating carrier entity objects containing data relating to said itinerary routes which are gathered, labelled and organized, injected and stored in the graph database, in the form of nodes, properties of the nodes, and edges as lines connecting nodes.

9. The method as in claim 6, wherein said seeker function (8) comprises:
- performing an itinerary building algorithm for searching said graph database (9) to select among said all possible multimodal itinerary routes those matching selection criteria received from said electronic client device, obtaining said selected multimodal itinerary routes;
- performing an itinerary ranking algorithm for ranking said selected multimodal itinerary routes according to ranking criteria either received from said electronic client device or deriving from said external service providers' databases (6) or said relational database (4).

10. The method as in claim 6, wherein said multimodal itinerary routes comprise data relating to different kinds of transport modes, to be combined for building said selected travel route comprising homogeneous, or inhomogeneous transport modes in the segments of said selected travel route.

11. An electronic client device adapted to be used in said system as in claim 1, comprising an interactive user interface bidirectionally communicating with said electronic system, and comprising:
- means for sending to the electronic system data relating to said requests for travel route building, comprising said starting location, target location and selection criteria;
- means for receiving said data relating to said ranked selected multimodal itinerary routes;
- means for graphically displaying said ranked selected multimodal itinerary routes, as interactive timelines;
- means for modifying said selection criteria and selecting one or more of said ranked selected multimodal itinerary routes interactively communicating with said electronic system.

12. Computer program comprising computer program code means adapted to perform all the steps of claims 6 to 10, when said program is run on a computer.

13. A computer readable medium having a program recorded thereon, said computer readable medium comprising computer program code means adapted to perform all the steps of claim 6 to 10, when said program is run on a computer.
